Europäisches Patentamt

European Patent Office

Office européen des brevets

(19)

(11) **EP 1 209 836 A1**

(12) **EUROPEAN PATENT APPLICATION**
published in accordance with Art. 158(3) EPC

(43) Date of publication:
**29.05.2002 Bulletin 2002/22**

(51) Int Cl.⁷: **H04J 11/00**

(21) Application number: **00953545.1**

(22) Date of filing: **22.08.2000**

(86) International application number:
**PCT/JP00/05599**

(87) International publication number:
**WO 01/17149 (08.03.2001 Gazette 2001/10)**

(84) Designated Contracting States:
**AT BE CH CY DE DK ES FI FR GB GR IE IT LI LU MC NL PT SE**
Designated Extension States:
**AL LT LV MK RO SI**

(30) Priority: **31.08.1999 JP 24529999**

(71) Applicant: **MATSUSHITA ELECTRIC INDUSTRIAL CO., LTD.**
**Kadoma-shi, Osaka 571-8501 (JP)**

(72) Inventor: **IMAMURA, Daichi**
**Yokosuka-shi, Kanagawa 239-0847 (JP)**

(74) Representative: **Grünecker, Kinkeldey, Stockmair & Schwanhäusser Anwaltssozietät**
**Maximilianstrasse 58**
**80538 München (DE)**

(54) **OFDM COMMUNICATION APPARATUS AND METHOD FOR PROPAGATION PATH ESTIMATION**

(57) The baseband signal obtained from the reception signal is compensated for propagation path distortion using a propagation path estimation value obtained by propagation path estimation/compensation circuit 104. The information bit string compensated for propagation path distortion is periodically sent to hard-decision circuit 107 and subjected there to hard-decision processing. These information symbols subjected to a hard decision are sent to propagation path estimation/ compensation circuit 104 where using these hard decision information symbols as known signals, a propagation path estimation is performed by carrying out a complex multiplication of the information symbols subjected to a hard decision with FFT-calculated signals and thereby a propagation path estimation value is obtained. This propagation path estimation value is updated to a first propagation path estimation value.

FIG.3

**Description**

Technical Field

The present invention relates to an OFDM communication apparatus and propagation path estimation method in a digital radio communication system.

Background Art

A main factor of deterioration of transmission characteristics of surface waves along a transmission path is multi-path interference. An OFDM (Orthogonal Frequency Division Multiplexing) transmission system resistant to this multi-path interference is becoming a focus of attention in recent years . This OFDM is a system of multiplexing a multitude (several tens to several hundreds) of mutually orthogonal digital modulated waves in a certain signal section.

A conventional OFDM communication apparatus performs time-frequency conversion on a reception signal through an FFT circuit, carries out a complex multiplication of pilot symbols contained in the reception signal with known signals, and thereby obtains a frequency response estimation value of the propagation path. Then, the conventional OFDM communication apparatus carries out a complex multiplication of the frequency response estimation value with information OFDM symbols, and thereby compensates for propagation path distortion. This reception signal compensated for propagation path distortion is subjected to demodulation and error correction by an error correction circuit to obtain an information symbol string, which is reception data.

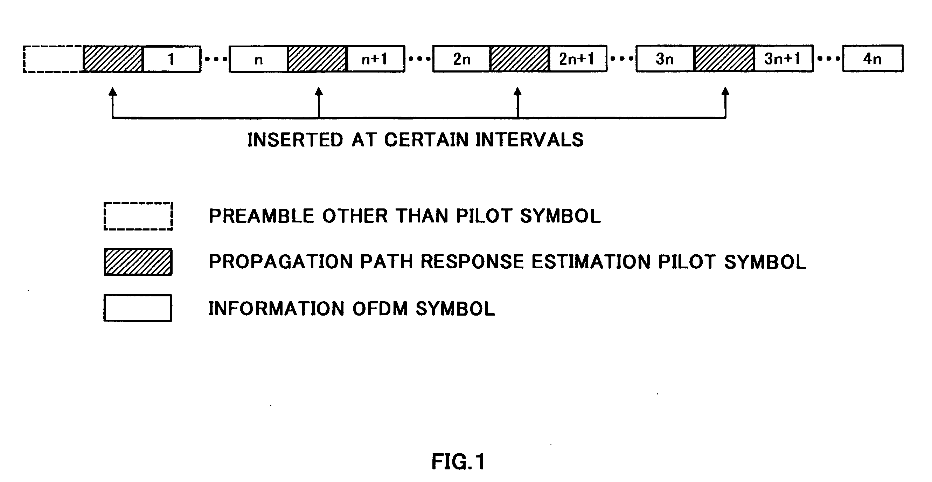

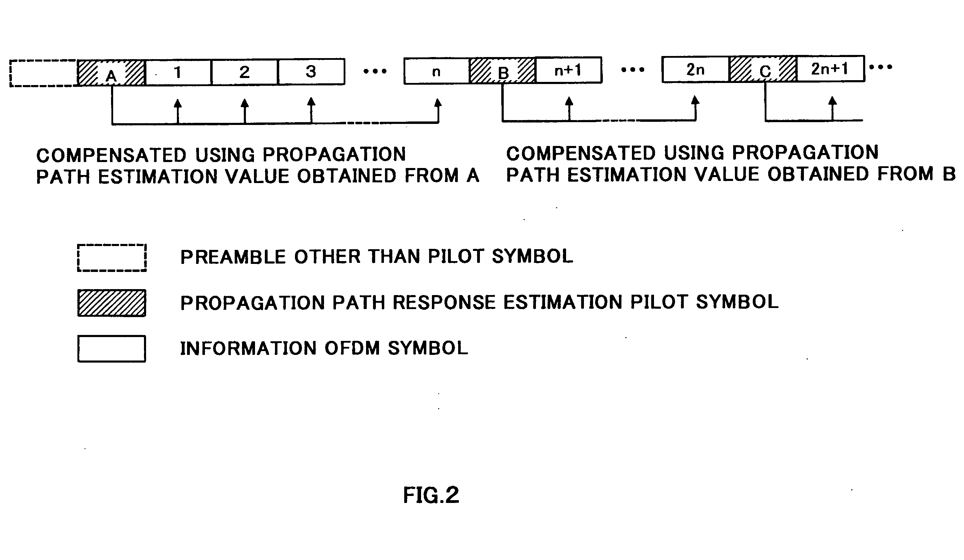

When long information is transmitted by the conventional OFDM communication apparatus above as shown in FIG.1, propagation path response estimation pilot symbols (hatching area) are inserted at predetermined intervals in information OFDM symbols to follow variations in momentarily changing propagation path responses. That is, as shown in FIG.2, information OFDM symbols 1 to n are compensated using a propagation path estimation value obtained with pilot symbol A and information OFDM symbols n+1 to 2n are compensated using a propagation path estimation value obtained with pilot symbol B.

However, in the case where such long information is transmitted, there is a problem that it is necessary to frequently insert known signals such as pilot symbols in order to follow time-variations of the propagation path, which reduces the transmission efficiency.

Disclosure of Invention

It is an object of the present invention to provide an OFDM communication apparatus and propagation path estimation method capable of adaptively following time-variations of the transmission path and improving reception characteristics without reducing the transmission efficiency even when there are great time-variations in propagation path responses.

An essence of the present invention consists in implementing excellent reception characteristics by adaptively estimating propagation path responses using a decision value of a reception signal, that is, using a decision value of a received information signal as a known signal without frequently inserting propagation path estimation pilot symbols or without reducing the transmission efficiency even when long information is transmitted.

Brief Description of Drawings

FIG.1 illustrates a symbol configuration used in a conventional propagation path estimation method;
FIG.2 is a diagram to explain the conventional propagation path estimation method;
FIG.3 is a block diagram showing a configuration of an OFDM communication apparatus according to Embodiment 1 of the present invention;
FIG.4 is a block diagram showing an internal configuration of a propagation path estimation/compensation circuit of the OFDM communication apparatus according to Embodiment 1 of the present invention;
FIG.5 is a block diagram showing an internal configuration of the propagation path estimation value update circuit shown in FIG.4;
FIG.6 illustrates a symbol configuration used in the propagation path estimation method according to the present invention;
FIG.7 is a diagram to explain the propagation path estimation method according to the present invention;
FIG.8 is a block diagram showing an internal configuration of a propagation path estimation value update circuit in a propagation path estimation/compensation circuit of the OFDM communication apparatus according to Embodiment 2 of the present invention;
FIG.9 is a block diagram showing an internal configuration of a propagation path estimation value update circuit in a propagation path estimation/compensation circuit of an OFDM communication apparatus according to Embodiment 3 of the present invention;
FIG.10 is a block diagram showing an internal configuration of a propagation path estimation value update circuit in a propagation path estimation/compensation circuit of an OFDM communication apparatus according to Embodiment 4 of the present invention;
FIG.11 is a block diagram showing an internal configuration of the propagation path estimation value update circuit in the propagation path estimation/compensation circuit of the OFDM communication apparatus according to Embodiment 4 of the present invention;

FIG.12 is a block diagram showing an internal configuration of a propagation path estimation/compensation circuit of an OFDM communication apparatus according to Embodiment 5 of the present invention;

FIG.13 is a block diagram showing an internal configuration of a propagation path estimation value update circuit in the propagation path estimation/compensation circuit of the OFDM communication apparatus according to Embodiment 5 of the present invention;

FIG.14 is a block diagram showing an internal configuration of a propagation path estimation value update circuit in a propagation path estimation/compensation circuit of an OFDM communication apparatus according to Embodiment 6 of the present invention;

FIG.15 is a block diagram showing an internal configuration of a propagation path estimation value update circuit in a propagation path estimation/compensation circuit of an OFDM communication apparatus according to Embodiment 7 of the present invention; and

FIG.16 is a block diagram showing an internal configuration of the propagation path estimation value update circuit in the propagation path estimation/compensation circuit of the OFDM communication apparatus according to Embodiment 7 of the present invention.

Best Mode for Carrying out the Invention

With reference now to the attached drawings, embodiments of the present invention will be explained in detail below.

(Embodiment 1)

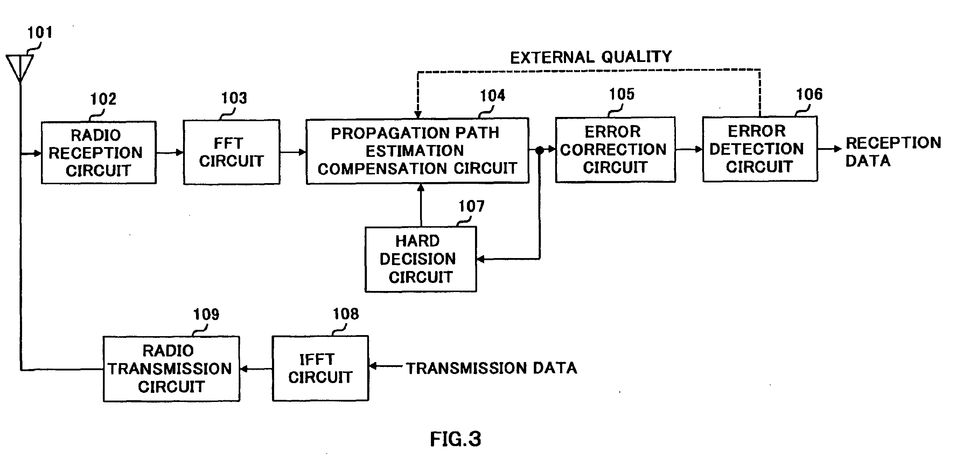

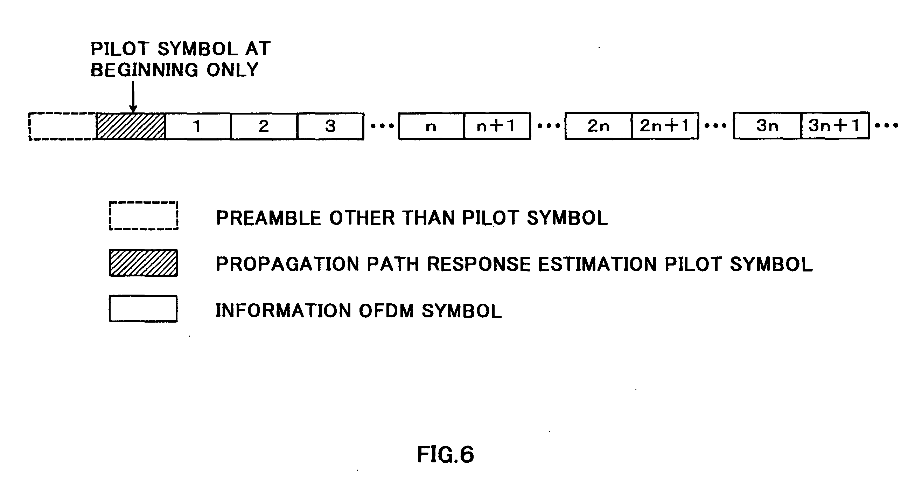

FIG.3 is a block diagram showing a configuration of an OFDM communication apparatus according to Embodiment 1 of the present invention. A signal used in OFDM communication has a configuration as shown in FIG.6. That is, the signal is configured by a preamble other than pilot symbol followed by a propagation path response estimation pilot symbol, which is a known signal, and information OFDM symbols. Thus, a propagation path estimation pilot symbol is added only at the beginning of the information symbols to be transmitted.

An OFDM signal received via antenna 101 is subjected to normal radio reception processing by radio reception circuit 102 and becomes a baseband signal. This baseband signal is subjected to quasi-coherent detection processing by a coherent detector, stripped of an unnecessary frequency component by a low-pass filter and A/D-converted. As a result of coherent detection processing, the reception signal is divided into an in-phase component and quadrature component, but these are only expressed as one signal route in the drawing.

This baseband signal is subjected to an FFT (Fast Fourier Transform) calculation by FFT circuit 103 and transformed to signals assigned to different subcarriers. The signal subjected to the FFT calculation by FFT section 103 is sent to propagation path estimation/compensation circuit 104, which carries out a complex multiplication of a pilot symbol with a known signal included in the reception OFDM signal, thereby carries out a propagation path estimation and obtains a first propagation path estimation value (initial value).

Propagation path estimation/compensation circuit 104 successively performs propagation path distortion compensation of information OFDM symbols using the first propagation path estimation value for every OFDM symbol. The information symbols compensated for propagation path distortion are successively sent to error correction circuit 105 where errors are corrected. Error correction circuit 105 outputs an information symbol string, which has been subjected to error correction in units of transmission path coding. This information symbol string is sent to error detection circuit 106 where the information symbol string is subjected to error detection and output as reception data.

The information symbol string compensated for propagation path distortion is sent to hard decision circuit 107. Hard decision circuit 107 performs hard decision processing on the information symbols compensated for propagation path distortion. That is, signal points of information symbols during transmission are subjected to a hard decision. The information symbol string subjected to this hard decision is sent to propagation path estimation/compensation circuit 104. Propagation path estimation/compensation circuit 104 uses these hard decision information symbols as known signals, carries out a complex multiplication with FFT-calculated signals and thereby carries out a propagation path estimation and obtains a propagation path estimation value. This propagation path estimation value is updated to a first propagation path estimation value.

This new propagation path estimation value is subjected to a complex multiplication with information OFDM symbols and thereby propagation path distortion compensation is carried out. The reception signal compensated for propagation path distortion is sent to error correction circuit 105 where errors are corrected. The information symbol string output from error correction circuit 105 is sent to error detection circuit 106 where the information symbol string is subjected to error detection and output as reception data.

By the way, a propagation path estimation value can be updated for every information symbol or for every plurality of information symbols. When a propagation path estimation value is updated for every plurality of information symbols, it is possible to provide a switch, etc. after error correction circuit 105 to switch between the output to hard decision circuit 107 and the output to detection circuit 106 through a control signal.

On the other hand, an information signal, which is transmission data for every subcarrier, is subjected to digital modulation processing with QPSK (Quadrature Phase Shift Keying) or QAM (Quadrature Amplitude Modulation), etc. by a modulation section, which is not shown in the drawing, and then subjected to an IFFT (Inverse Fast Fourier Transform) calculation by IFFT circuit 108 and becomes an OFDM signal. This OFDM signal is D/A-converted and then sent to radio transmission circuit 109 where the OFDM signal is subjected to radio transmission processing and then transmitted as a transmission signal via antenna 101.

Then, the operation of the OFDM communication apparatus in the above configuration will be explained.

The OFDM signal received via antenna 101 is subjected to normal radio reception processing by radio reception circuit 102, becomes a baseband signal and is subjected to an FFT calculation by FFT circuit 103 and transformed to signals assigned to different subcarriers.

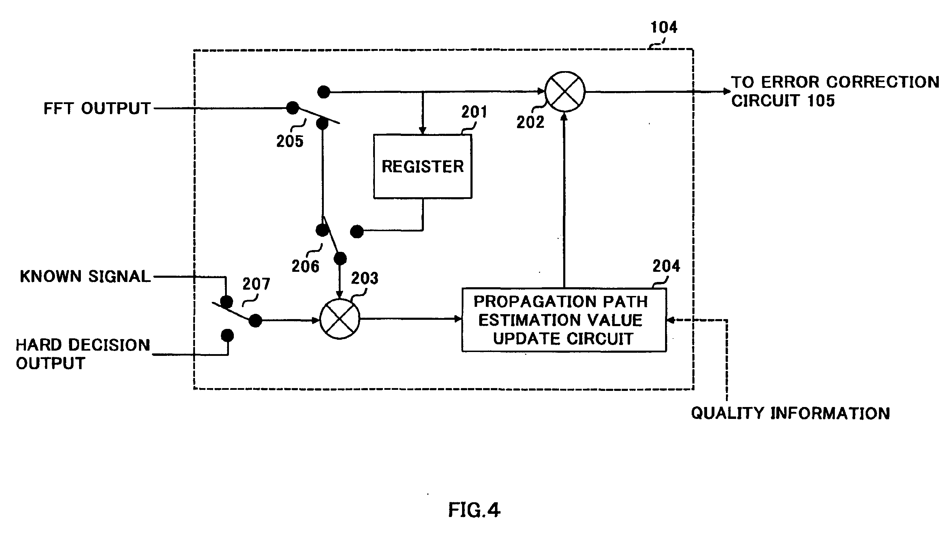

This signal is sent to propagation path estimation/compensation circuit 104. As shown in FIG.4, propagation path estimation/compensation circuit 104 includes register 201 that stores the output from FFT circuit 103, multiplier 203 that carries out a complex multiplication of this FFT output with a known signal or the output from hard decision circuit 107, propagation path estimation value update circuit 204 that stores a propagation path estimation value, which is the output from multiplier 203, and updates to a new propagation path estimation value and multiplier 202 that carries out a complex multiplication of the propagation path estimation value with FFT output.

Propagation path estimation/compensation circuit 104 also includes switch 205 to switch between multiplier 203 and multiplier 202 to which the FFT output is output, switch 206 to switch between the output from FFT circuit 103 and the FFT output stored in register 201 to be output to multiplier 203 and switch 207 to switch between a known signal or the output from hard decision circuit 107 to be output to multiplier 203.

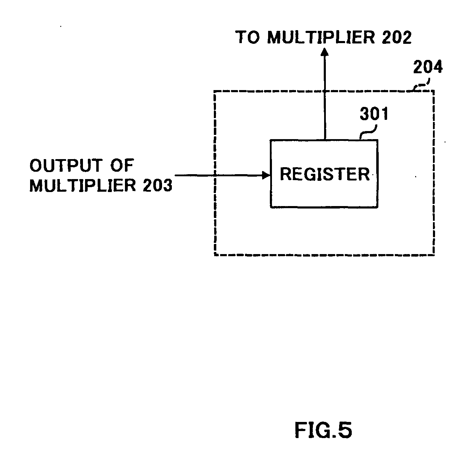

Furthermore, propagation path estimation value update circuit 204 has register 301 as shown in FIG. 5.

First, propagation path estimation/compensation is performed using a pilot symbol. A signal sent to propagation path estimation/compensation circuit 104, that is, FFT output is sent to multiplier 203 first and multiplier 203 carries out a complex multiplication of a pilot symbol of the FFT output with a known signal. Thus, a first propagation path estimation value (initial value) is obtained. At this time, switches 205 to 207 are set so that the FFT output and known signal are input to multiplier 203. This propagation path estimation value is stored in register 301 of propagation path estimation value update circuit 204.

On the other hand, this propagation estimation value is sent to multiplier 202 and multiplier 202 multiplies the propagation estimation value by information symbols of the FFT output. In this way, the information symbols are compensated for propagation path distortion. The information symbols compensated for propagation path distortion in this way are sent to error correction circuit 105.

The information symbols compensated for propagation path distortion are sent to error correction circuit 105, subjected there to error correction and then sent to error detection circuit 106 where the information symbols are subjected to error detection and output as reception data.

Furthermore, the information symbols compensated for propagation path distortion are sent to hard decision circuit 107 where signal points of the information symbols during transmission are decided and the result of this signal point decision is sent to propagation path estimation/compensation circuit 104. That is, the information symbols subjected to a hard decision in this way are sent to multiplier 203 of on propagation path estimation/compensation circuit 104. Then, propagation path estimation/compensation is performed using this information symbols subjected to a hard decision. Propagation path estimation/compensation circuit 104 uses these hard decision information symbols instead of a known signal and carries out a complex multiplication of these hard decision information symbols with the FFT output. At this time, the FFT output is stored in register 201. In this case, switches 205 to 207 are set so that the FFT output stored in register 201 and the hard decision output are output to multiplier 203.

In this way, a propagation path estimation value is obtained through a complex multiplication of the hard decision information symbols with FFT output. This propagation path estimation value is sent to propagation path estimation value update circuit 204. Then, the propagation path estimation value (initial value) stored in register 301 of propagation path estimation value update circuit 204 is updated using this propagation path estimation value.

Moreover, the updated propagation path estimation value is sent to multiplier 202 and multiplier 202 multiplies the updated propagation path estimation value by the information symbols of the FFT output. In this way, the information symbols are compensated for propagation path distortion. The information symbols compensated for propagation path distortion in this way are sent to error correction circuit 105.

The information symbols compensated for propagation path distortion are sent to error correction circuit 105 and subjected to error correction and then sent to error detection circuit 106, subjected there to error correction and output as reception data.

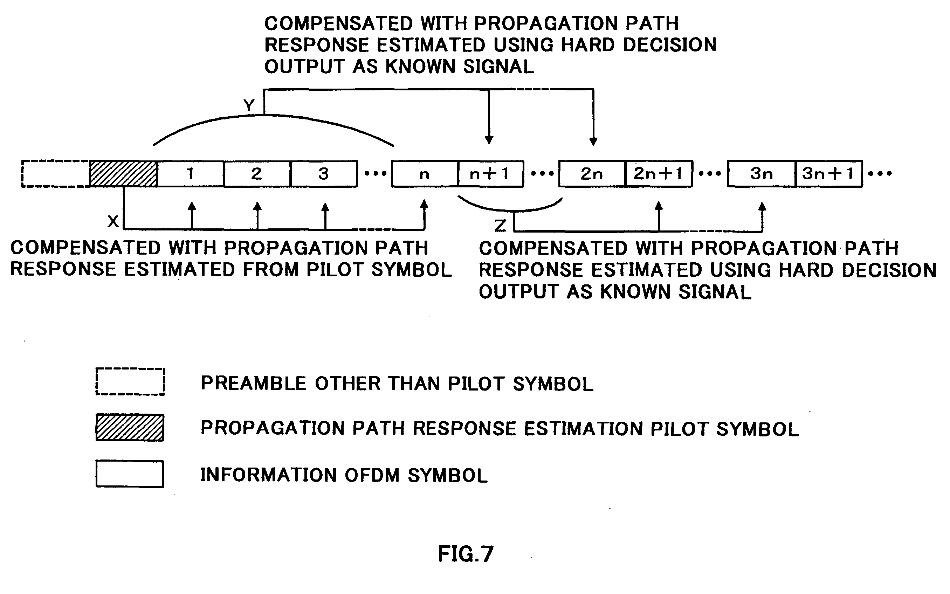

In such a propagation path estimation method, as shown in FIG.7, information symbols 1 to n are compensated for propagation path distortion using a propagation path estimation value (X) obtained with a pilot symbol (hatching area) and information symbols n+1 to 2n are compensated for propagation path distortion using a propagation path estimation value (Y) obtained by using the hard decision outputs of information symbols 1 to n as known signals and information symbols 2n+1 to 3n are compensated for propagation path distortion using the propagation path estimation value (Y) obtained by using the hard decision outputs of information symbols n+1 to 2n as known signals. Therefore, even when long information is sent, it is possible to estimate propagation path responses without inserting pilot symbols between information OFDM symbols consecutively transmitted, thus achieving excellent reception characteristics without reducing the transmission efficiency.

Furthermore, when the hard decision output of an information symbol is used as a known signal, it is also possible to obtain quality information about a plurality of information symbols, input the quality information to propagation path estimation value update circuit 204 and decide which information symbol hard decision output is appropriate as a known signal for calculation of a propagation path estimation value. This makes it possible to obtain an optimal propagation path estimation value and carry out appropriate propagation path distortion compensation for information symbols. Therefore, even when long information is sent or when there is a large time-variation in propagation path responses, it is possible to adaptively follow time-variations of the transmission path and maintain a low error rate without reducing the transmission efficiency.

(Embodiment 2)

The OFDM communication apparatus according to this embodiment updates a propagation path estimation value through propagation path estimation value update circuit 204 using both propagation path estimation values obtained using information symbols after a hard decision and past propagation path estimation values.

Since the configuration of the OFDM communication apparatus according to this embodiment is the same as that of Embodiment 1 except the propagation path estimation value update circuit, the propagation path estimation value update circuit will be explained.

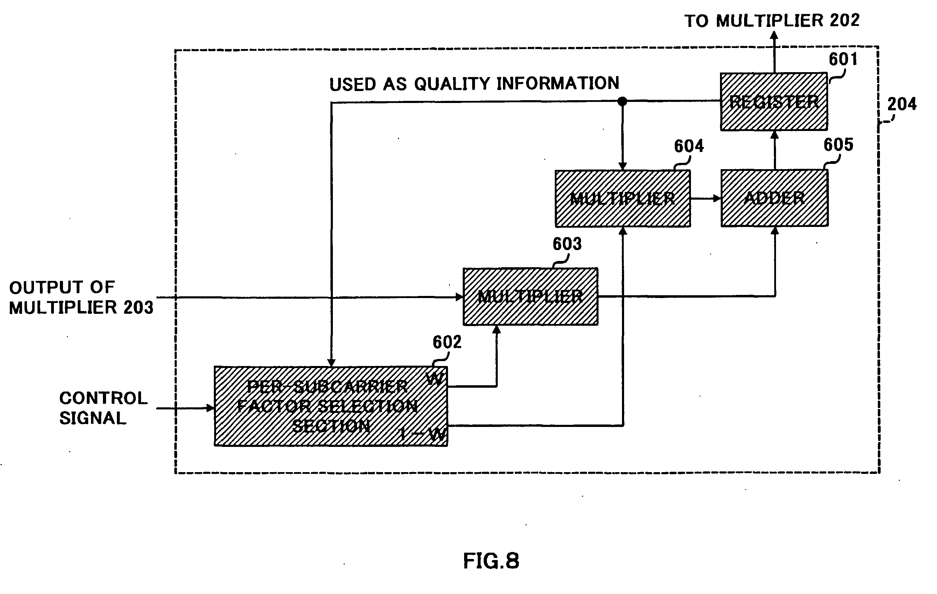

FIG.8 is a block diagram showing an internal configuration of the propagation path estimation value update circuit in the propagation path estimation/compensation circuit of the OFDM communication apparatus according to Embodiment 2 of the present invention. This propagation path estimation value update circuit includes register 601 that stores propagation path estimation values and outputs these propagation path estimation values to multiplier 202, multipliers 603 and 604 that multiply the propagation path estimation values stored in register 601 by weighting factors, adder 605 that adds up the multiplication results of multipliers 603 and 604 and per-subcarrier factor selection section 602 that selects weighting factors of the output of multiplier 203 and past propagation path estimation values stored in register 601 using a control signal.

The propagation path estimation value update circuit shown in FIG.8 updates a propagation path estimation value using both propagation path estimation values obtained using information symbols after a hard decision and past propagation path estimation values and the propagation path estimation value to be updated follows expression (1), for example.

$$\text{(Estimation value to be updated)} = w \times \text{(output of}$$

$$\text{multiplier 203)} + (1\text{-W}) \times \text{(immediately preceding}$$

$$\text{estimation value)} \qquad \text{Expression (1)}$$

where, W denotes a weighting factor and is given by per-subcarrier factor selection section 602. Per-subcarrier factor selection section 602 provides a weighting factor for every subcarrier based on past propagation path response estimation values. Per-subcarrier factor selection section 602 selects preset weighting factors according to a control signal based on information such as channel quality. By the way, a same weighting factor can also be used in all cases.

More specifically, propagation path estimation value update circuit 204 outputs a past (here, immediately preceding) propagation path estimation value from register 601 to multiplier 604. On the other hand, a propagation path estimation value (output of multiplier 203) obtained using the current information symbol after a hard decision as a known signal is output to multiplier 603.

According to a control signal based on information such as channel quality, per-subcarrier factor selection section 602 selects a weighting factor (W) to be multiplied on the current propagation path estimation value and past propagation path estimation value and outputs the weighting factor for the current propagation path estimation value to multiplier 603 and the weighting factor for the past propagation path estimation value to multiplier 604.

Multipliers 603 and 604 each assign weights to the current propagation path estimation value and past propagation path estimation value, and output these results to adder 605. Adder 605 adds up the respective weighted propagation path estimation values and calculates a propagation path estimation value to be updated. Then, the calculated propagation path estimation values are sent to register 601 and the propagation path estimation values stored in the register are updated.

According to this embodiment, new propagation path estimation values are obtained using also past propagation path response estimation values, and therefore it is possible to obtain high estimation accuracy using these propagation path estimation values and carry out propagation path distortion compensation for information symbols more accurately.

(Embodiment 3)

The OFDM communication apparatus according to this embodiment adds processing of averaging propagation path estimation values corresponding to n symbols using information symbols after a hard decision.

Since the configuration of the OFDM communication apparatus according to this embodiment is the same as that of Embodiment 1 except the propagation path estimation value update circuit, the propagation path estimation value update circuit will be explained.

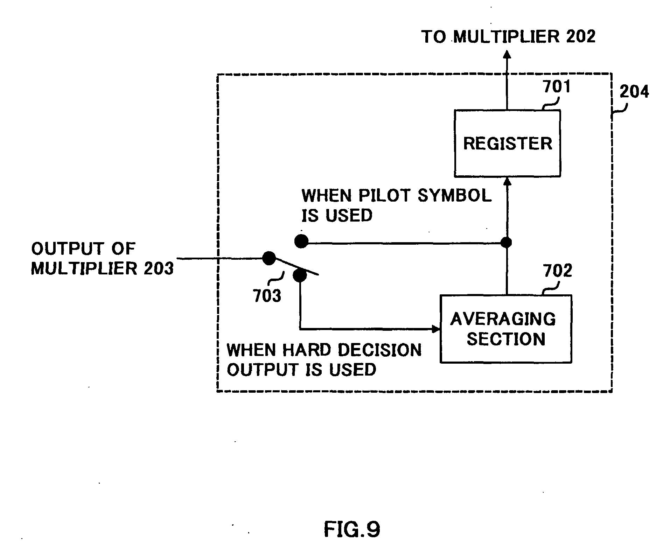

FIG.9 is a block diagram showing an internal configuration of the propagation path estimation value update circuit in the propagation path estimation/compensation circuit of the OFDM communication apparatus according to Embodiment 3 of the present invention. This propagation path estimation value update circuit includes register 701 that stores propagation path estimation values and outputs these propagation path estimation values to multiplier 202 and averaging section 702 that averages propagation path estimation values obtained using information symbols after a hard decision for n symbols. Furthermore, the propagation path estimation value update circuit also includes switch 703 that selects whether the propagation path estimation value (output of multiplier 203) is directly output to register 701 or output to averaging section 702.

In this configuration, in the case where a propagation path estimation value is obtained using a pilot symbol, switch 703 is set so that the output of multiplier 203 is sent to register 701 and the propagation path estimation value is sent to register 701 and stored in register 701. On the other hand, in the case where a propagation path estimation value is obtained using information symbols after a hard decision, switch 703 is set so that the output of multiplier 203 is sent to averaging section 702, the propagation path estimation values are sent to averaging section 702 where propagation path estimation values corresponding to n symbols are averaged. The averaged propagation path estimation value is sent to register 701 and the propagation path estimation value stored in register 701 is updated. In the case where the amplitude of a transmission signal contains information such as multi-value QAM, averaging section 702 can also be configured so as not to include values of signal points having a small amplitude in averaging and thereby further reduce deterioration by additive noise.

This embodiment averages newly obtained propagation path estimation values for a plurality of symbols, and therefore can reduce estimation errors due to additive noise. Using these propagation path estimation values makes it possible to achieve higher estimation accuracy and carry out a propagation path distortion compensation for information symbols more accurately.

(Embodiment 4)

The OFDM communication apparatus according to this embodiment adds processing of averaging propagation path estimation values for n symbols through propagation path estimation value update circuit 204 by using information symbols after a hard decision and updates propagation path estimation values using both averaged propagation path estimation values and past propagation path estimation values.

Since the configuration of the OFDM communication apparatus according to this embodiment is the same as that of Embodiment 1 except the propagation path estimation value update circuit, the propagation path estimation value update circuit will be explained.

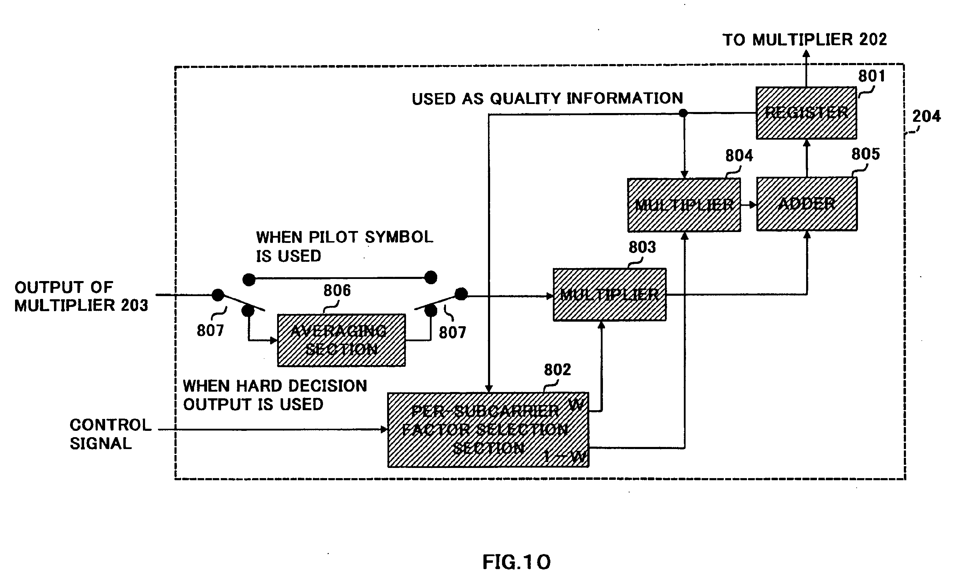

FIG.10 is a block diagram showing an internal configuration of the propagation path estimation value update circuit in the propagation path estimation/compensation circuit of the OFDM communication apparatus according to Embodiment 4 of the present invention. This propagation path estimation value update circuit includes register 801 that stores propagation path estimation values and outputs these propagation path estimation values to multiplier 202, multipliers 803 and 804 that multiply the propagation path estimation values stored in register 801 by weighting factors, adder 805 that adds up the multiplication results of multipliers 803 and 804, per-subcarrier factor selection section 802 that selects weighting factors of the output of multiplier 203 and past propagation path estimation values stored in register 801 using a control signal and averaging section 806 that averages propagation path estimation values obtained using information symbols after a hard decision for n symbols. Furthermore, the propagation path estimation value update circuit also includes switch 807 that selects whether the propagation path estimation value (output of multiplier 203) is directly output to register 803 or output to averaging section 806 and then output to multiplier 803.

The propagation path estimation value update circuit shown in FIG.10 averages propagation path estimation values obtained using information symbols after a hard decision for n symbols and updates a propagation path estimation value using both the averaged propagation path estimation values and past propagation path estimation values and the propagation path estimation value to be updated follows expression (2), for example.

(Estimation value to be updated) = W × (output of

averaging circuit) + (1-W) × (immediately preceding

estimation value)      Expression (2)

where, W denotes a weighting factor and is given by per-subcarrier factor selection section 802. Per-subcarrier factor selection section 802 provides a weighting factor for every subcarrier based on past propagation path response estimation values. Per-subcarrier factor selection section 802 selects preset weighting factors according to a control signal based on information such as channel quality. By the way, a same weighting factor can also be used in all cases.

More specifically, propagation path estimation value update circuit 204 outputs a past (here, immediately preceding) propagation path estimation value from register 801 to multiplier 804.

On the other hand, in the case where a propagation path estimation value is obtained using a pilot symbol, switch 807 is set so that the output of multiplier 203 is sent to multiplier 803 and the propagation path estimation value is sent to multiplier 803 and a weighting factor is multiplied by multiplier 803. On the other hand, in the case where a propagation path estimation value is obtained using information symbols after a hard decision, switch 807 is set so that the output of multiplier 203 is sent to averaging section 806, the propagation path estimation values are sent to averaging section 806 where propagation path estimation values corresponding to n symbols are averaged. The averaged propagation path estimation value is sent to multiplier 803 and a weighting factor is multiplied by multiplier 803.

At this time, according to a control signal based on information such as channel quality, per-subcarrier factor selection section 802 selects weighting factors (W) to be multiplied on the current propagation path estimation value and past propagation path estimation values and outputs the weighting factor for the average output of the current propagation path estimation value to multiplier 803 and weighting factor for the past propagation path estimation value to multiplier 804.

Multipliers 803 and 804 assign weights to the average output of the current propagation path estimation values and past propagation path estimation values , respectively, and output these results to adder 805. Adder 805 adds up the respective weighted propagation path estimation values and calculates a propagation path estimation value to be updated. Then, the calculated propagation path estimation value is sent to register 801 and the propagation path estimation values stored in the register are updated. In the case where the amplitude of a transmission signal contains information such as multi-value QAM, averaging section 806 can be configured so as not to include values of signal points having a small amplitude in averaging and thereby further reduce deterioration by additive noise.

This embodiment averages newly obtained propagation path estimation values for a plurality of symbols, and thereby can reduce estimation errors due to additive noise. Moreover, new propagation path estimation values are obtained also using past propagation path response estimation values, and therefore it is possible to obtain higher estimation accuracy. As a result, it is possible to carry out propagation path distortion compensation for information symbols more accurately.

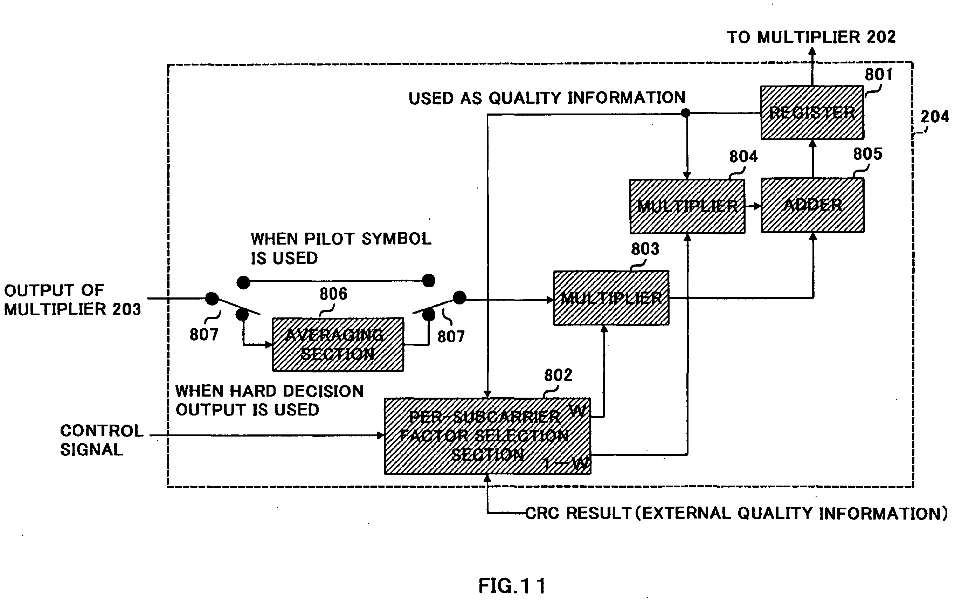

In this embodiment, it is also possible to enter a CRC (Cyclic Redundancy Check) result to per-subcarrier factor selection section 802 as external quality information as shown in FIG.11. This is intended to set so that averaged blocks including information symbols in which errors have been detected as a result of the CRC are not used as the averaging output. At this time, weighting factor W in expression (2) above becomes 0.

Thus, applying external quality information to selection of weighting factors makes it possible to reduce estimation errors due to bit errors and achieve drastic improvement in the estimation accuracy.

(Embodiment 5)

The OFDM communication apparatus according to this embodiment uses signals compensated for propagation path distortion as information OFDM symbols stored to be used for successive propagation path estimations. More specifically, the OFDM communication apparatus according to this embodiment calculates a difference between an information OFDM symbol compensated for propagation path distortion stored in a register and a hard decision output and updates the past propagation path estimation value by an amount corresponding to the difference.

Since the configuration of the OFDM communication apparatus according to this embodiment is the same as that of Embodiment 1 except the propagation path estimation/compensation circuit, the propagation path estimation/compensation circuit will be explained.

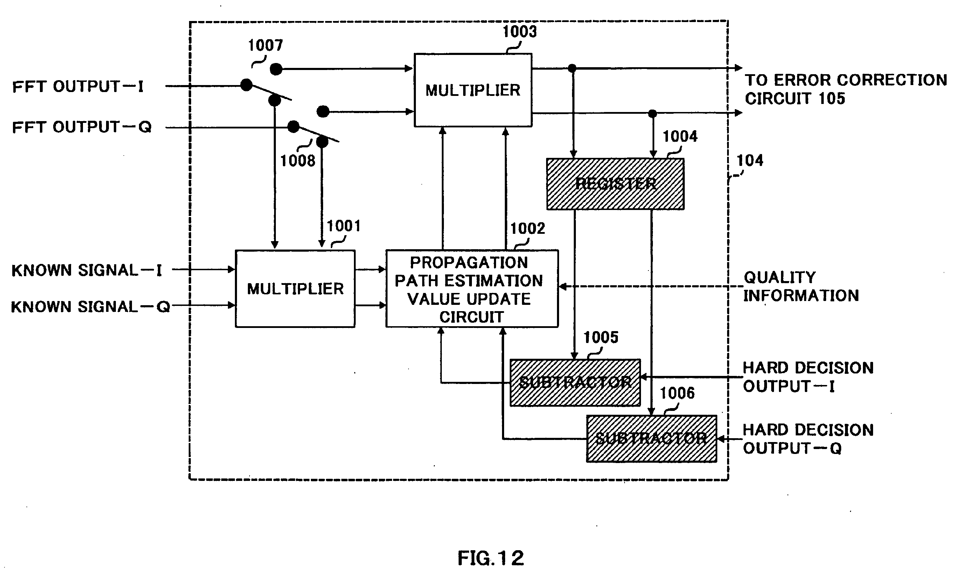

FIG.12 is a block diagram showing an internal configuration of the propagation path estimation/compensation circuit of the OFDM communication apparatus according to Embodiment 5 of the present invention.

The propagation path estimation/compensation circuit 104 includes multiplier 1001 that carries out a complex multiplication of the output from FFT circuit 103 (FFT output) with a known signal, propagation path estimation value update circuit 1002 that stores the output of multiplier 1001, that is, a propagation path estimation value and updates the propagation path estimation value to a new propagation path estimation value, multiplier 1003 that carries out a complex multiplication of the output from propagation path estimation value update section 1002 with the FFT output, register 1004 that stores information symbols compensated for propagation path distortion, which is the output of multiplier 1003 and subtractors 1005 and 1006 that calculates a difference between the information symbol after propagation path distortion compensation and the output of hard decision circuit 107. Moreover, propagation path estimation/compensation circuit 104 also includes switches 1007 and 1008 to select multiplier 1003 or multiplier 1001 to which the FFT output is output. Here, the FFT output, known signal and hard decision output are expressed with I components and Q components.

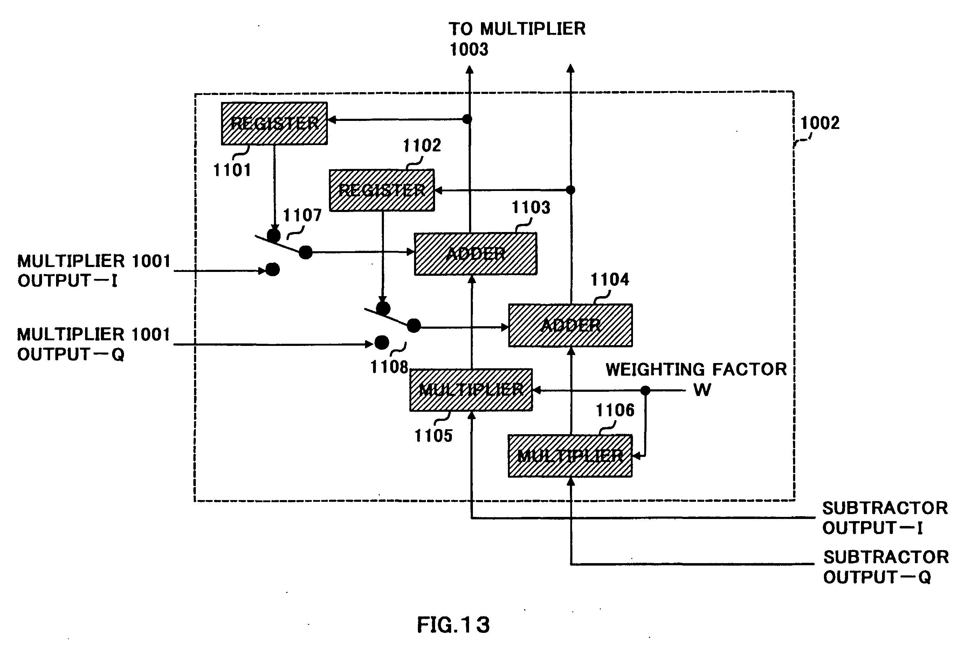

As shown in FIG. 13 , this propagation path estimation value update circuit 1002 includes registers 1101 and 1102 that store a propagation path estimation value (output of multiplier 1001) and output the propagation path estimation value to adders 1103 and 1104, multipliers 1105 and 1106 that multiply the outputs of subtractors 1005 and 1006 by weighting factors, adders 1103 and 1104 that add up the multiplication results of multipliers 1105 and 1106 and the propagation path estimation values stored in registers 1101 and 1102. Moreover, propagation path estimation value update circuit 1002 also includes switches 1107 and 1108 to select registers 1101, 1102 or adders 1103 and 1104 to which the output of multiplier 1001 is output.

The operation of the OFDM communication apparatus in the above configuration will be explained. The signal sent to propagation path estimation/compensation circuit 104, that is, FFT output, is sent to multiplier 1001 first and multiplier 1001 carries out a complex multiplication of the I component and Q component of the FFT output with the I component and Q component of a known signal. In this way, a propagation path estimation value is obtained. At this time, switches 1007 and 1008 are set so that the FFT output and known signal are input to multiplier 1001. This propagation path estimation value is stored in registers 1101 and 1102 of propagation path estimation value update circuit 1002. At this time, switches 1107 and 1108 of propagation path estimation value update circuit 1002 are set so that the output of multiplier 1001 is sent to registers 1101 and 1102.

Moreover, this propagation path estimation value is sent to multiplier 1003 and multiplier 1003 carries out a complex multiplication of the I component and Q component of the FFT output with the I component and Q component of the information symbol. In this way, the information symbol is compensated for propagation path distortion. The information symbol compensated for propagation path distortion in this way is sent to error correction circuit 105. Furthermore, the information symbol compensated for propagation path distortion is stored in register 1004.

The information symbol compensated for propagation path distortion is sent to error correction circuit 105, subjected there to error correction and then sent to error detection circuit 106, subjected there to error detection and output as reception data.

Furthermore, the information symbols compensated for propagation path distortion are sent to hard decision circuit 107 where signal points of the information symbols during transmission are decided and the result of this signal point decision is sent to propagation path estimation/compensation circuit 104. That is, the I component of the hard-decided information symbol string is sent to subtractor 1005 of propagation path estimation/compensation circuit 104 and the Q component is sent to subtractor 1006 of propagation path estimation/compensation circuit 104.

Subtractor 1005 calculates a difference between the I component of the hard-decided information symbol string and the I component of the information symbol compensated for propagation path distortion stored in the register and this difference value is input to multiplier 1105 of propagation path estimation value update circuit 1002.

Subtractor 1006 calculates a difference between the Q component of the hard-decided information symbol string and the Q component of the information symbol compensated for propagation path distortion stored in the register and this difference value is input to multiplier 1106 of propagation path estimation value update circuit 1002.

Multipliers 1105 and 1106 multiply the difference values by weighting factors ($0<W\leqq1$). Thus, multiplying by weighting factor W reduces the difference values, preventing influences by large estimation errors. This weighting coefficient W can be fixed or changed according to the channel condition as appropriate.

The difference values with weighting factor W multiplied are sent to adders 1103 and 1104. Adder 1103 adds up the I components of the difference values and the I components of the propagation path estimation values (output of multiplier 1001) and adder 1104 adds up the Q components of the difference values and the Q components of the propagation path estimation values (output of multiplier 1001) to produce a new propagation path estimation value. This new propagation path estimation value is sent to registers 1101 and 1102, updated and sent to multiplier 1003 of propagation path estimation/compensation circuit 104.

Multiplier 1003 carries out a complex multiplication of the I component and Q component of the information symbol of the FFT output with the I component and Q component of the propagation path estimation value. In this way, the information symbol is compensated for propagation path distortion. The information symbol compensated for propagation path distortion in this way is sent to error correction circuit 105.

The information symbol compensated for propagation path distortion is sent to error correction circuit 105, subjected there to error correction and then sent to error detection circuit 106, subjected there to error detection and output as reception data.

As shown above, this embodiment allows propagation path responses to be estimated without inserting pilot symbols between information OFDM symbols consecutively transmitted, making it possible to obtain excellent reception characteristics without reducing the transmission efficiency. Moreover, even if there is a residual phase error, this embodiment only corrects the difference while compensating the residual phase error, and therefore can reduce deterioration of the estimation accuracy due to the residual phase error.

(Embodiment 6)

The OFDM communication apparatus according to this embodiment includes propagation path estimation value update circuit 1002 that adopts variable weighting factors using past propagation path estimation values as quality information.

Since the configuration of the OFDM communication apparatus according to this embodiment is the same as that of Embodiment 5 except the propagation path estimation value update circuit, the propagation path estimation value update circuit will be explained.

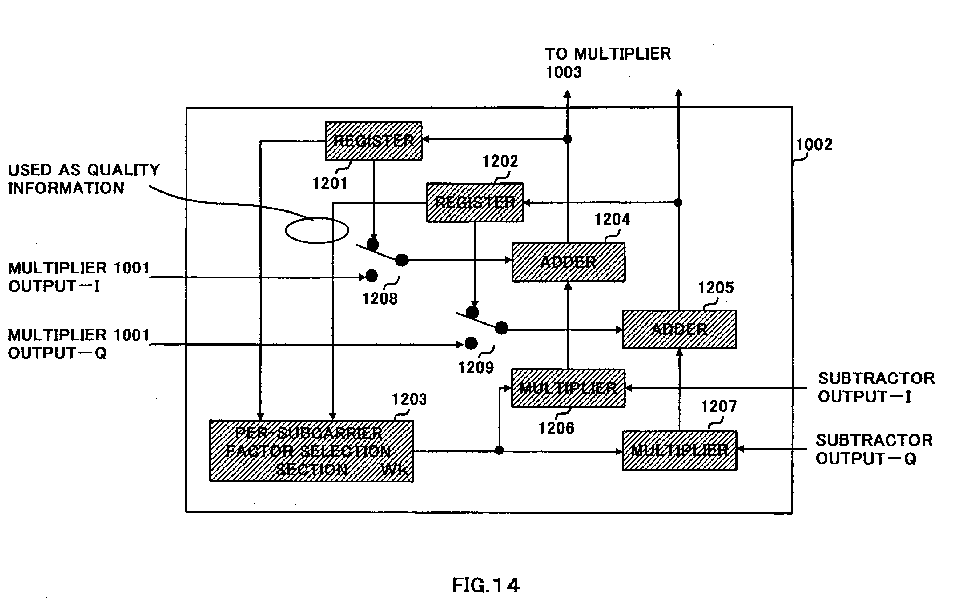

FIG.14 is a block diagram showing an internal configuration of the propagation path estimation value update circuit of the OFDM communication apparatus according to Embodiment 6 of the present invention.

This propagation path estimation value update circuit 1002 includes registers 1201 and 1202 that store propagation path estimation values (output of multiplier 1001) and output these propagation path estimation values to adders 1204 and 1205, multipliers 1206 and 1207 that multiply the outputs of subtractors 1005 and 1006 by weighting factors, adders 1204 and 1205 that add up the multiplication results of multipliers 1206 and 1207 and propagation path estimation values stored in registers 1201 and 1202, per-subcarrier factor selection section 1203 that selects weighting factor Wk using the propagation path estimation values stored in registers 1201 and 1202 as quality information. Furthermore, propagation path estimation value update circuit 1002 also includes switches 1208 and 1209 to select registers 1201, 1202 or adders 1204 and 1205 to which the output of multiplier 1001 is output.

The operation of the OFDM communication apparatus in the above configuration will be explained. The propagation path estimation values (output of multiplier 1001) are stored in registers 1201 and 1202 of propagation path estimation value update circuit 1002. At this time, switches 1208 and 1209 of propagation path estimation value update circuit 1002 are set so that the output of multiplier 1001 is sent to registers 1201 and 1202.

Difference values from subtractors 1005 and 1006 are input to multipliers 1206 and 1207 . Multipliers 1206 and 1207 multiply the difference values by weighting factor Wk. This weighting factor Wk is selected by per-subcarrier factor selection section 1203. Weighting factor Wk is selected using the propagation path estimation values stored in registers 1201 and 1202 as quality information. Thus, difference values are reduced by multiplying the difference values by weighting factor Wk, and therefore it is possible to prevent influences by large estimation errors.

The difference values with weighting factor Wk multiplied are sent to adders 1204 and 1205. Then, adder 1204 adds up the I components of the difference values and the I components of the propagation path estimation values (output of multiplier 1001) and adder 1205 adds up the Q components of the difference values and the Q components of the propagation path estimation values (output of multiplier 1001) to produce a new propagation path estimation value. This new propagation path estimation value is sent to registers 1201 and 1202, updated and sent to multiplier 1003 of propagation path estimation/compensation circuit 104.

This embodiment allows propagation path responses to be estimated without inserting pilot symbols between information OFDM symbols consecutively transmitted and changes weighting factors for every subcarrier, making it possible to obtain excellent reception characteristics without reducing the transmission efficiency. Moreover, even if there is a residual phase error, this embodiment only corrects the difference while compensating the residual phase error, and therefore can reduce deterioration of the estimation accuracy due to the residual phase error.

(Embodiment 7)

The OFDM communication apparatus according to this embodiment includes propagation path estimation value update circuit 1002 that averages the outputs of the subtractors.

Since the configuration of the OFDM communication apparatus according to this embodiment is the same as that of Embodiment 6 except the propagation path estimation value update circuit, the propagation path estimation value update circuit will be explained.

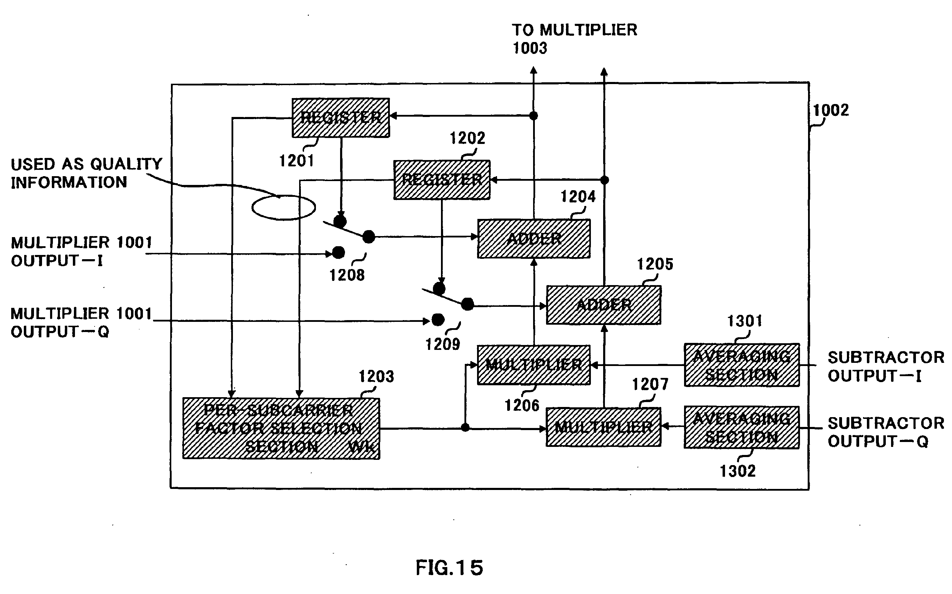

FIG.15 is a block diagram showing an internal configuration of the propagation path estimation value update circuit in the propagation path estimation/compensation circuit of the OFDM communication apparatus according to Embodiment 7 of the present invention.

In propagation path estimation value update circuit 1002, the I component of the difference value of subtractor 1005 is input to averaging section 1301 and the Q component of the difference value of subtractor 1006 is input to averaging section 1302. Averaging sections 1301 and 1302 perform averaging processing on difference values corresponding to n symbols. The I component of this averaged difference value is sent to multiplier 1206 and the Q component of this averaged difference value is sent to multiplier 1207. The processing hereafter is the same as that of Embodiment 6. Furthermore, in the case where the amplitude of a transmission signal contains information such as multi-value QAM, averaging sections 1301 and 1302 can be configured so as not to include values of signal points having a small amplitude in averaging and thereby further reduce deterioration by additive noise.

This embodiment can obtain a propagation path variation estimation value more reliably by averaging the outputs of the subtractors, thus obtaining excellent reception characteristics without reducing the transmission efficiency. Moreover, even if there is a residual phase error, this embodiment only corrects the difference while compensating the residual phase error, and therefore can reduce deterioration of the estimation accuracy due to the residual phase error.

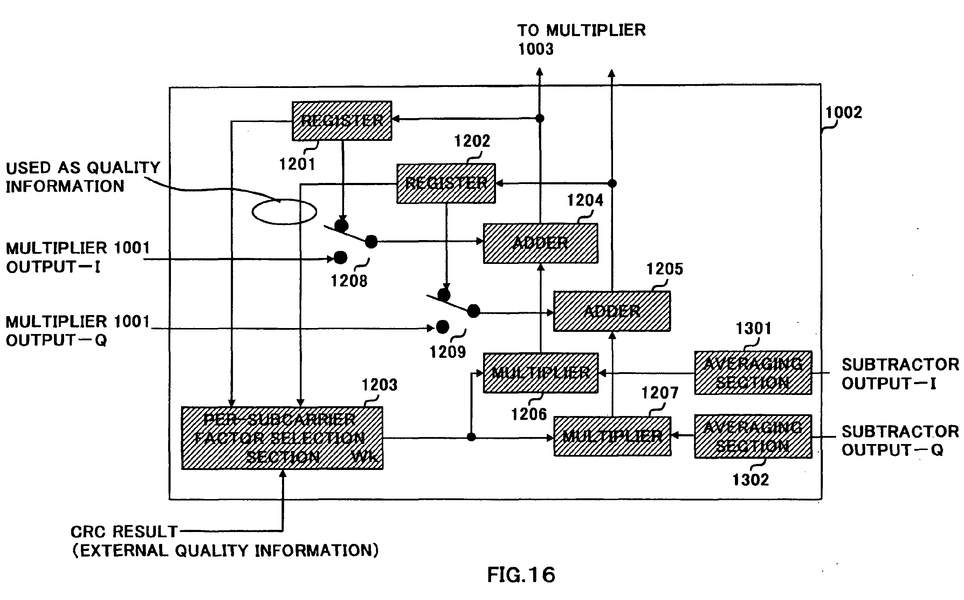

In this embodiment, it is also possible to enter a CRC (Cyclic Redundancy Check) result to per-subcarrier factor selection section 1203 as external quality information as shown in FIG.16. This is intended to set so that averaged blocks in which errors have been detected as a result of the CRC are not used as the difference value of the estimated propagation path variation.

Thus, applying external quality information to selection of weighting factors makes it possible not only to obtain a propagation path variation estimation value more accurately but also to reduce estimation errors due to bit errors, thereby obtaining excellent reception characteristics without reducing the transmission efficiency. Moreover, even if there is a residual phase error, this embodiment only corrects the difference while compensating the residual phase error, and therefore can reduce deterioration of the estimation accuracy due to the residual phase error.

The present invention is not limited to Embodiments 1 to 7, but can be implemented with various modifications. For example, the present invention can be implemented by combining Embodiments 1 to 7 as appropriate.

The OFDM communication apparatus of the present invention adopts a configuration including an estimation value calculation section that obtains a propagation path estimation value using a known signal of an OFDM signal containing the known signal, a propagation path distortion compensation section that compensates propagation path distortion for the information signal obtained from the OFDM signal using the propagation path estimation value and a hard decision section that decides transmission signal points using the information signal compensated for propagation path distortion, wherein the estimation value calculation section calculates a propagation path estimation value using the hard-decided signal instead of the known signal.

This configuration calculates a propagation path estimation value using a hard-decided information signal instead of a known signal, making it possible to estimate propagation path responses without inserting pilot symbols between information OFDM symbols consecutively transmitted even when long information is sent and obtain excellent reception characteristics without reducing the transmission efficiency.

The OFDM communication apparatus adopts a configuration including an estimation value calculation section that obtains a propagation path estimation value using a known signal of an OFDM signal containing the known signal, a propagation path distortion compensation section that compensates propagation path distortion for the information signal obtained from the OFDM signal using the propagation path estimation value and a hard decision section that decides transmission signal points using the information signal compensated for propagation path distortion, wherein the estimation value calculation section calculates a propagation path estimation value using a difference between the hard-decided signal and the information signal compensated for propagation path distortion.

This configuration can estimate propagation path responses without inserting pilot symbols between information OFDM symbols consecutively transmitted and obtain excellent reception characteristics without reducing the transmission efficiency. Moreover, even if there is a residual phase error, this embodiment only corrects the difference while compensating the residual phase error, and therefore can reduce deterioration of the estimation accuracy due to the residual phase error.

The OFDM communication apparatus in the above configuration has the propagation path estimation value calculation section that calculates a new propagation path estimation value using the propagation path estimation value obtained from the hard-decided current information signal and past information signal.

The OFDM communication apparatus in the above configuration includes weighting means for assigning weights to the hard-decided current information signal and past information signal.

These configurations obtain a new propagation path estimation value also using a past propagation path estimation value, and therefore can achieve high estimation accuracy by using this propagation path estimation value and carry out propagation path distortion compensation for information symbols more accurately.

The OFDM communication apparatus in the above configuration has the weighting section that assigns weights based on external quality information. This configuration applies the external quality information to selection of weighting factors, and therefore can reduce estimation errors due to bit errors and drastically improve the estimation accuracy.

The OFDM communication apparatus in the above configuration has the estimation value calculation section including an averaging section that averages information signals of a plurality of hard-decided symbols.

This configuration averages newly obtained propagation path estimation values corresponding to a plurality of symbols, and therefore can reduce estimation errors due to additive noise and achieve high estimation accuracy and carry out propagation path compensation for information symbols more accurately by using this propagation path estimation value.

The communication apparatus of the present invention is characterized by comprising the OFDM communication apparatus in the above configuration. Furthermore, the base station apparatus of the present invention is characterized by comprising the OFDM communication apparatus in the above configuration.

These configurations can implement a radio communication system capable of estimating propagation path responses without inserting pilot symbols between information OFDM symbols consecutively transmitted even when long information is sent and obtaining excellent reception characteristics without reducing the transmission efficiency.

The propagation path estimation method of the present invention includes an estimation value calculating step of obtaining a propagation path estimation value using a known signal of an OFDM signal containing the known signal, a propagation path distortion compensating step of compensating propagation path distortion for the information signal obtained from the OFDM signal using the propagation path estimation value and a hard decision step of deciding transmission signal points using the information signal compensated for propagation path distortion, wherein the estimation value calculating step calculates a propagation path estimation value using the hard-decided signal instead of the known signal.

This method calculates a propagation path estimation value using a hard-decided information signal instead of a known signal, making it possible to estimate propagation path responses without inserting pilot symbols between information OFDM symbols consecutively transmitted even when long information is sent and obtain excellent reception characteristics without reducing the transmission efficiency.

The propagation path estimation method of the present invention includes an estimation value calculating step of obtaining a propagation path estimation value using a known signal of an OFDM signal containing the known signal, a propagation path distortion compensating step of compensating propagation path distortion for the information signal obtained from the OFDM signal using the propagation path estimation value and a hard decision step of deciding transmission signal points using the information signal compensated for propagation path distortion, wherein the estimation value calculating step calculates a propagation path estimation value using a difference between the hard-decided signal and the information signal compensated for propagation path distortion.

This method can estimate propagation path responses without inserting pilot symbols between information OFDM symbols consecutively transmitted, and therefore obtain excellent reception characteristics without reducing the transmission efficiency. Moreover, even if there is a residual phase error, this embodiment only corrects the difference while compensating the residual phase error, and therefore can reduce deterioration of the estimation accuracy due to the residual phase error.

As described above, the OFDM communication apparatus of the present invention adaptively estimates propagation path responses using a hard-decided signal, that is, using a decision value of the received information signal as a known signal, making it possible to maintain a low error rate by adaptively following time-variations of the transmission path even when long information is sent or when there is a great variation in propagation path responses.

This application is based on the Japanese Patent Application No.HEI 11-245299 filed on August 31, 1999, entire content of which is expressly incorporated by reference herein.

Industrial Applicability

The present invention is applicable to a base station apparatus or communication terminal apparatus in a digital radio communication system.

**Claims**

1. An OFDM communication apparatus comprising:

   estimation value calculating means for calculating a propagation path estimation value using a known signal of an OFDM signal containing said known signal;
   propagation path distortion compensating means for compensating propagation path distortion for the information signal obtained from said OFDM signal using said propagation path estimation value; and
   hard decision means for deciding transmission signal points using the information signal compensated for propagation path distortion, wherein said estimation value calculating means calculates a propagation path estimation value using said hard-decided signal instead of said known signal.

2. An OFDM communication apparatus comprising:

   estimation value calculating means for calculating a propagation path estimation value using a known signal of an OFDM signal containing said known signal;
   propagation path distortion compensating means for compensating propagation path distortion for the information signal obtained from said OFDM signal using said propagation path estimation value; and hard decision means for deciding transmission signal points using the information signal compensated for propagation path distortion, wherein said estimation value calculating means calculates a propagation path estimation value using a difference between said hard-decided signal and the information signal compensated for propagation path distortion.

3. The OFDM communication apparatus according to claim 1, wherein said estimation value calculating means calculates a new propagation path estimation value using the propagation path estimation value obtained from the hard-decided current information signal and hard-decided past information signal.

4. The OFDM communication apparatus according to claim 3, further comprising weighting means for assigning weights to the hard-decided current information signal and past information signal.

5. The OFDM communication apparatus according to claim 4, wherein said weighting means assigns weights based on external quality information.

6. The OFDM communication apparatus according to claim 1, wherein said estimation value calculating means comprises averaging means for averaging information signals of a plurality of hard-decided symbols.

7. A communication terminal apparatus equipped with an OFDM communication apparatus, said OFDM communication apparatus comprising:

   estimation value calculating means for calculating a propagation path estimation value using a known signal of an OFDM signal containing said known signal;
   propagation path distortion compensating means for compensating propagation path distortion for the information signal obtained from said OFDM signal using said propagation path estimation value; and
   hard decision means for deciding transmission signal points using the information signal compensated for propagation path distortion, wherein said estimation value calculating means calculates a propagation path estimation value using said hard-decided signal instead of said known signal.

8. A base station apparatus equipped with an OFDM communication apparatus, said OFDM communication apparatus comprising:

   estimation value calculating means for calculating a propagation path estimation value using a known signal of an OFDM signal containing said known signal;
   propagation path distortion compensating means for compensating propagation path distortion for the information signal obtained from said OFDM signal using said propagation path estimation value; and
   hard decision means for deciding transmission signal points using the information signal compensated for propagation path distortion, wherein said estimation value calculating means calculates a propagation path estimation value using said hard-decided signal instead of said known signal.

9. A propagation path estimation method comprising:

   an estimation value calculating step of calculating a propagation path estimation value using a known signal of an OFDM signal containing said known signal;
   a propagation path distortion compensating step of compensating propagation path distortion for the information signal obtained from said OFDM signal using said propagation path estimation value; and
   a hard decision step of deciding transmission signal points using the information signal compensated for propagation path distortion, wherein said estimation value calculating step calculates a propagation path estimation value using said hard-decided signal instead of said known signal.

10. A propagation path estimation method comprising:

   an estimation value calculating step of calculating a propagation path estimation value using a known signal of an OFDM signal containing said known signal;
   a propagation path distortion compensating step of compensating propagation path distortion for the information signal obtained from said OFDM signal using said propagation path estimation value; and a hard decision step of deciding transmission signal points using the information signal compensated for propagation path distortion, wherein said estimation value calculating step calculates a propagation path estimation value using a difference between said hard-decided signal and the information signal compensated for propagation path distortion.

EP 1 209 836 A1

| | | | 1 | | ••• | | n | | n+1 | ••• | | 2n | | 2n+1 | ••• | | 3n | | 3n+1 | ••• | | 4n | |

INSERTED AT CERTAIN INTERVALS

PREAMBLE OTHER THAN PILOT SYMBOL

PROPAGATION PATH RESPONSE ESTIMATION PILOT SYMBOL

INFORMATION OFDM SYMBOL

FIG.1

| A | 1 | 2 | 3 | ••• | n | B | n+1 | ••• | 2n | C | 2n+1 | ••• |

COMPENSATED USING PROPAGATION
PATH ESTIMATION VALUE OBTAINED FROM A

COMPENSATED USING PROPAGATION
PATH ESTIMATION VALUE OBTAINED FROM B

PREAMBLE OTHER THAN PILOT SYMBOL

PROPAGATION PATH RESPONSE ESTIMATION PILOT SYMBOL

INFORMATION OFDM SYMBOL

FIG.2

FIG.3

EP 1 209 836 A1

FIG.4

EP 1 209 836 A1

TO MULTIPLIER 202

204

301

OUTPUT OF
MULTIPLIER 203 → REGISTER

FIG.5

PILOT SYMBOL AT
BEGINNING ONLY

| | 1 | 2 | 3 | ••• | n | n+1 | ••• | 2n | 2n+1 | ••• | 3n | 3n+1 | •••

PREAMBLE OTHER THAN PILOT SYMBOL

PROPAGATION PATH RESPONSE ESTIMATION PILOT SYMBOL

INFORMATION OFDM SYMBOL

FIG.6

EP 1 209 836 A1

COMPENSATED WITH PROPAGATION PATH
RESPONSE ESTIMATED USING HARD DECISION
OUTPUT AS KNOWN SIGNAL

Y

| 1 | 2 | 3 | ••• | n | n+1 | ••• | 2n | 2n+1 | ••• | 3n | 3n+1 | ••• |

X

COMPENSATED WITH PROPAGATION PATH
RESPONSE ESTIMATED FROM PILOT SYMBOL

Z

COMPENSATED WITH PROPAGATION PATH
RESPONSE ESTIMATED USING HARD DECISION
OUTPUT AS KNOWN SIGNAL

PREAMBLE OTHER THAN PILOT SYMBOL

PROPAGATION PATH RESPONSE ESTIMATION PILOT SYMBOL

INFORMATION OFDM SYMBOL

FIG.7

EP 1 209 836 A1

TO MULTIPLIER 202

USED AS QUALITY INFORMATION

601
REGISTER

204

604
MULTIPLIER

605
ADDER

603
MULTIPLIER

OUTPUT OF
MULTIPLIER 203

602
PER-SUBCARRIER W
FACTOR SELECTION
SECTION 1-W

CONTROL
SIGNAL

FIG.8

EP 1 209 836 A1

TO MULTIPLIER 202

FIG.9

TO MULTIPLIER 202

USED AS QUALITY INFORMATION

REGISTER **801**

**204**

**804** MULTIPLIER **805** ADDER

**803** MULTIPLIER

WHEN PILOT SYMBOL
IS USED

**806**

OUTPUT OF
MULTIPLIER 203

**807** AVERAGING
SECTION **807**

WHEN HARD DECISION
OUTPUT IS USED

CONTROL
SIGNAL

**802** PER-SUBCARRIER W
FACTOR SELECTION
SECTION 1-W

FIG.10

FIG.11

TO MULTIPLIER 202

801
REGISTER

204

USED AS QUALITY INFORMATION

804
MULTIPLIER

805
ADDER

803
MULTIPLIER

WHEN PILOT SYMBOL
IS USED

806

OUTPUT OF
MULTIPLIER 203

807

807

AVERAGING
SECTION

WHEN HARD DECISION
OUTPUT IS USED

802
PER-SUBCARRIER W
FACTOR SELECTION
SECTION 1−W

CONTROL
SIGNAL

CRC RESULT(EXTERNAL QUALITY INFORMATION)

EP 1 209 836 A1

23

FIG.12

FFT OUTPUT—I

FFT OUTPUT—Q

KNOWN SIGNAL—I

KNOWN SIGNAL—Q

1007

1008

1001

MULTIPLIER

1003 MULTIPLIER

PROPAGATION PATH ESTIMATION VALUE UPDATE CIRCUIT 1002

REGISTER 1004

SUBTRACTOR 1005

SUBTRACTOR 1006

104

TO ERROR CORRECTION CIRCUIT 105

QUALITY INFORMATION

HARD DECISION OUTPUT—I

HARD DECISION OUTPUT—Q

FIG.13

EP 1 209 836 A1

FIG.14

EP 1 209 836 A1

TO MULTIPLIER
1003

1002

REGISTER
1201

1202
REGISTER

USED AS QUALITY
INFORMATION

1204
ADDER

MULTIPLIER 1001
OUTPUT−I

1208

1205
ADDER

MULTIPLIER 1001
OUTPUT−Q

1209

1301
AVERAGING
SECTION

SUBTRACTOR
OUTPUT−I

MULTIPLIER
1206

1203
PER−SUBCARRIER
FACTOR SELECTION
SECTION    Wk

1207
MULTIPLIER

1302

1302
AVERAGING
SECTION

SUBTRACTOR
OUTPUT−Q

FIG.15

FIG.16

EP 1 209 836 A1

## INTERNATIONAL SEARCH REPORT

| | International application No. |
|---|---|
| | PCT/JP00/05599 |

A. CLASSIFICATION OF SUBJECT MATTER
   Int.Cl$^7$   H04J11/00

According to International Patent Classification (IPC) or to both national classification and IPC

B. FIELDS SEARCHED

Minimum documentation searched (classification system followed by classification symbols)
   Int.Cl$^7$   H04J11/00

Documentation searched other than minimum documentation to the extent that such documents are included in the fields searched
   Jitsuyo Shinan Koho           1926-2000
   Kokai Jitsuyo Shinan Koho   1971-2000

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | EP, 700189, A1 (NOKIA TECHNOLOGY GmbH),<br>06 March, 1996 (06.03.96),<br>Fig. 4<br>& FI, 9403613, A | 1,3,7-9<br>2,10<br>4-6 |
| Y<br>A | JP, 10-247889, A (Toshiba Corporation),<br>14 September, 1998 (14.09.98),<br>Fig. 7   (Family: none) | 1-3,7-10<br>4-6 |
| Y<br>A | JP, 11-203607, A (NEC Corporation),<br>30 July, 1999 (30.07.99),<br>Figs. 1, 16   (Family: none) | 1-3,7-10<br>4-6 |
| A | JP, 6-311192, A (Kokusai Electric Co., Ltd.),<br>04 November, 1994 (04.11.94),<br>Fig. 8   (Family: none) | 1-10 |

☐ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 November, 2000 (09.11.00) | 21 November, 2000 (21.11.00) |

| Name and mailing address of the ISA/<br>   Japanese Patent Office | Authorized officer |
|---|---|
| Facsimile No. | Telephone No. |

Form PCT/ISA/210 (second sheet) (July 1992)